# EUROPEAN PATENT SPECIFICATION

(11) **EP 1 340 011 B1**
(45) Date of publication and mention of the grant of the patent: **19.07.2006**
(21) Application number: 01987858.6
(22) Date of filing: 15.10.2001
(51) Int. Cl.: F16K 1/00

(54) **VALVES**
VENTILE
SOUPAPES

(30) Priority: 18.10.2000 GB 0025505
(43) Date of publication of application: 03.09.2003
(73) Proprietor: Perolo S.A., 33390 Blaye (FR)
(72) Inventor: DELLARAGIONE, Jean, 33 390 Blaye (FR); SURMAN, Pierre, F-33390 Blaye (FR); LACOSTE, Eric, Larrieu, F-33390 St. Genes de Blaye (FR)
(74) Representative: Neill, Alastair William
(86) International application number: PCT/IB2001/002342
(87) International publication number: WO 2002/033295

(56) References cited:
- CH-A- 378 627
- FR-A- 1 336 176
- FR-A- 2 715 142
- US-A- 2 212 370
- US-A- 3 692 213
- US-A- 4 251 049
- US-A- 4 312 373
- US-A- 4 590 959
- US-A- 5 076 539
- US-A- 5 244 181
- US-A- 5 931 444

## Description

The invention relates to valves and particularly, though not exclusively, to valves for use in controlling the flow of liquid out of containers, for example tanker vehicles.

US 3692213 discloses a valve for use in controlling the flow of liquid out of a container, the valve comprising a valve body having an inlet and an outlet for liquid, a valve seat, a valve member movable in the downstream direction onto the valve seat to close the valve, and an operating device for the valve member positioned downstream of the valve member, the valve member being guided for translational movement between open and closed positions.

The invention provides a valve for use in controlling the flow of liquid out of a container, the valve comprising a valve body having an inlet and an outlet for liquid, a valve seat, a valve member movable in the downstream direction onto the valve seat to close the valve, and an operating device for the valve member positioned downstream of the valve member, the valve member being guided for translational movement between opened and closed positions, there being a spring arranged to urge the operating member in a direction to close the valve; the valve also having a control member for applying force to open the valve; characterised in that there is a shaft which extends from the operating member out of the valve body; to engage firstly with the control member and then with the spring the spring comprising a spiral spring wound around the shaft and contained within a spring housing separate from the valve body.

Such a valve has a number of advantages as described later in this specification.

The valve member may comprise a head and a shank, the shank sliding in a guide member to define the translational movement.

The operating device preferably contacts the valve member to bring about movement of the valve member, without being connected to the valve member.

The operating device may comprise a pivotally mounted operating lever, part of the operating lever being inserted into a space in the valve member.

The shank of the valve member may have a slot therein, an end of the operating lever being inserted into the slot.

The spring may pull the valve member closed to ensure tightness.

The control member may comprise a control lever.

One end of the spring may be locked in position by locking means, the locking means being disconnectable to de-stress or unload the spring.

The operating device may have an S-shaped portion.

The operating device may have a portion with a cam like portion, enabling the valve to move into an over-centre position in which the valve is locked in the open position.

The inner end of the shaft may be mounted in a blind socket so that no liquid can seep past the shaft at that end.

The passage containing the shaft may be provided with a seal to prevent liquid from seeping to atmosphere.

The invention includes a container for liquid fitted with a valve according to the invention.

The container may comprise a tanker vehicle.

By way of example, a specific embodiment of the invention will now be described, with reference to the accompanying drawings, in which:
Figure 1 is a side view of an embodiment of a valve according to the invention, in the open position;
Figure 2 is a cross-sectional view on line A-A of Figure 1;
Figure 3 is a view on arrow B of Figure 1;
Figure 4 is a cross-sectional view showing how a valve member and operating member cooperate in the open position of the valve;
Figure 5 is a view similar to Figure 4 but showing the valve in its closed position;
Figure 6 is a view similar to Figure 4 but showing how the valve member may be removed;
Figure 7A shows the valve member in more detail; and
Figure 7B shows the cross-section of the shank of the valve member.

The valve shown in the figures is primarily intended to control the flow of liquid out of a container, for example a tanker vehicle. The valve comprises a valve body 10 having an inlet flange 11 and an outlet flange 12. In use the flange 11 is sealingly bolted to the container to enable the valve to receive liquid from the container when the valve is open, and the flange 12 is connected to apparatus which is to receive liquid from the container in use, for example delivery pipework (not shown).

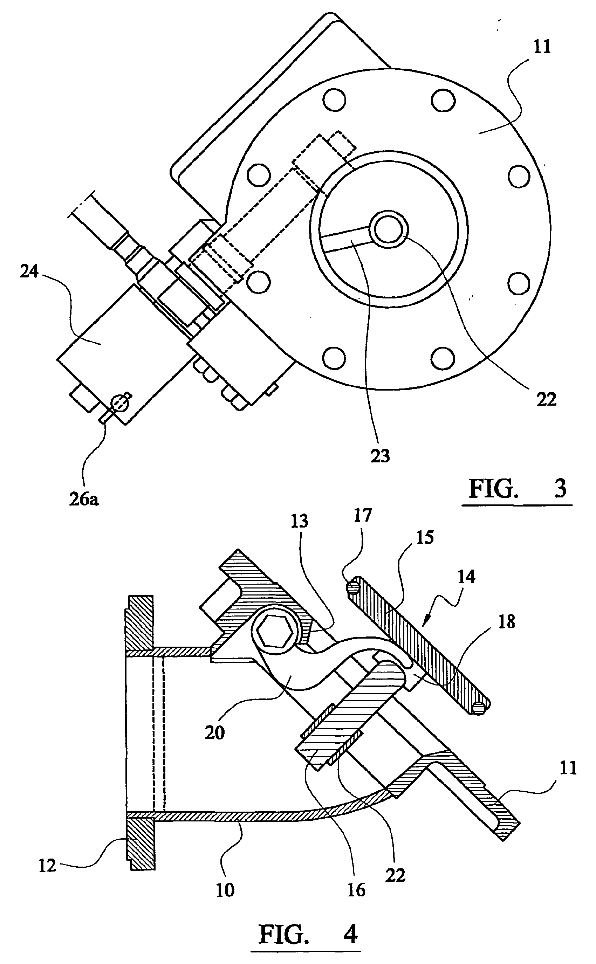

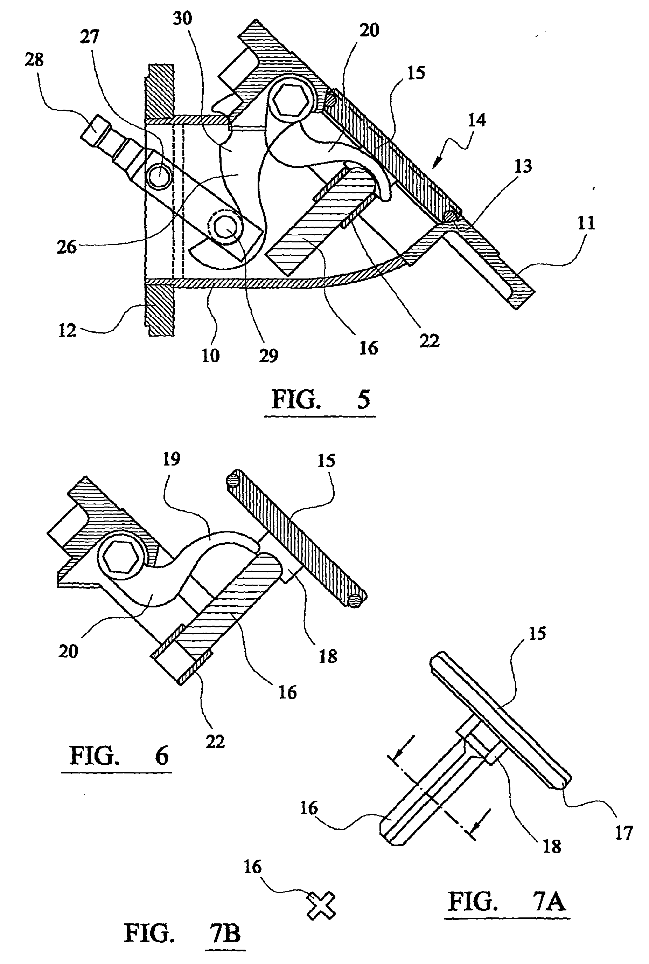

As best seen in Figures 4 and 5, the flange 11 defines a valve seat 13 and in the closed position of the valve, a valve member 14 seals against the valve seat 13. The valve member 14 is a poppet valve having a head 15 and a shank 16. The periphery of the head 15 is fitted with an O-ring seal 17.

As the head 15 is fitted on the inner side of the valve seat 13 with respect to the inside of the container, fluid pressure within the container tends to maintain the valve member in the closed position shown in Figure 5.

Where the shank 16 meets the head 15, there is a slot 18 through the head, best seen in Figure 6. In use the free end 19 of an S-shaped operating lever 20 passes through this slot to enable the lever 20 to control movement of the valve without actually being connected to the valve member.

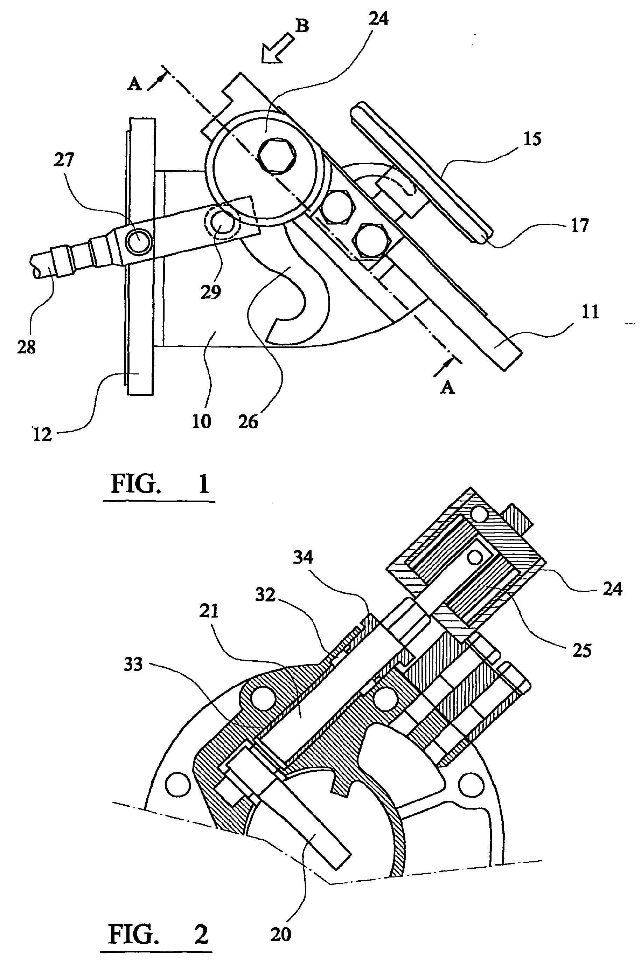

The S-shaped lever 20 is pivotally mounted by connecting it to a shaft 21, best seen in Figure 2.

Although the arm 20 pivots, the valve member 14 has a translational movement. Movement of the valve member 14 is guided by a sleeve 22 which surrounds the shank 16. As best seen in Figure 3, the sleeve 22 is secured in position by an arm 23 which projects inwardly from a side of the valve body 10. In an alternative construction there may be two arms projecting from opposite sides of the valve body 10.

Attached to the valve housing 10 is a spring chamber 24 which contains a spiral spring 25 (see Figure 2).

One end of the spring 25 is in a rotating housing which is locked in position by a pin 26a (see Figure 3) and the inner end of the spring 25 is connected to the outer end of the shaft 21. The spring is pre-wound during assembly of the valve so that the action of the spring biases the valve member 14 into the closed position.

To control the S-shaped operating lever 20, a curved lever 26 is attached to the shaft 21, between the valve body 10 and the spring chamber 24. Pivotally mounted on the valve body at 27 (see Figure 1) there is a straight lever having a gripping end 28 and an operating head 29.

In order to move the valve member 14 from the closed position shown in Figure 5 to the open position shown in Figure 4, the gripping portion 28 is manually forced downwardly as viewed in Figure 1. This causes the head 29 to rise, and come into contact with the outer part of the lever 26. Continued upward movement of the head 29 causes the lever 26 to pivot anti-clockwise as viewed in Figure 1, lifting the valve head 15 off the valve seat.

Final upward movement of the head 29 causes the head to move past a cam like portion 30 of the lever 26 (see Figure 5). Thus, the head 29 finally moves into an over-centre position in which the lever 26 moves back slightly under the action of the spring 25, to lock the valve head 15 in the open position.

The geometry for the cam portion 30 of lever 26 is designed to apply little force to the lever 28 during the first degrees of rotation which provide the first millimetres of translational movement of the poppet valve 14. This means that when an operator opens the valve under pressure, to decompress the tank, a minimum of force by the operator is required.

The valve can be closed again by moving the gripping portion 28 upwardly, with the help of the spring.

The invention provides a valve in which few of the operating parts come into contact with the liquid flowing out of the container. This can have advantages where the liquid may cause corrosion or fouling of the components.

The inner end of the shaft 21 is mounted in a blind socket 31 so that no liquid can seep past the shaft 21 at that end.

Within the passage containing the shaft 21 a seal 33 is provided to prevent liquid from seeping to atmosphere. A second barrier for seating is assured by packing 32, held in place by a gland screw 34.

The fact that the valve member 14 has a translational movement has a number of advantages.

Firstly, liquid flow is symmetrical all around the poppet which decreases pressure drop and accelerates the discharge of liquid from the container.

If, prior to opening of the valve, there is any congealed liquid tending to maintain the valve in the closed position, this congealed seal is broken in the most efficient way, since the forces tending to move the poppet into the open position are perpendicular to the surrounding flange 11.

When the valve closes again, the poppet is automatically centred with respect to the valve seat 13.

Maintenance of the valve member 14 is particularly easy. This is because there is no actual connection between the operating lever 20 and the valve member. To remove the valve member for cleaning or replacement of the seal 17, it is simply necessary to carry out further pivotal movement of the lever 20, as shown in Figure 6, until the free end of the lever 20 moves clear of the slot 18. The shank 16 can then be withdrawn from the guide sleeve 22. To get this further pivotal movement, it is necessary to disconnect pin 26a to de-stress or unload the spring.

Re-assembling the valve is equally easy and there are no components such as connecting pins or other mechanical liaison which might be forgotten or mis-assembled.

The spiral spring 25 does not need any special tool to pre-stress the spring.

In the case of a broken spring situation, it is possible to maintain sealing assistance to the valve member 14 by applying a braking force to the shaft 21. This is done by screwing down the gland 34 with a wrench, thus compressing the packing 32. The packing expands laterally to grip the shaft 21 tightly. This frictional gripping of the shaft 21 by the packing 32 resists rotation of the shaft 21 and so helps to maintain the sealing position of the valve member 14.

Because there is no direct connection between the lever 20 and the valve member 14, a further advantage is that if the lever 20 should break, there is nothing to prevent closing translational movement of the valve so the valve is fail-safe in that it will always return to the closed position, under the influence of pressure within the container, in the event of breakage.

Since the shank 16 of the valve is a simple X cross-section, as shown in Figure 7B, it is easy to clean.

Before the lever 20 can be moved into the extreme position shown in Figure 6, to enable removal of the valve member 14, it may be necessary to remove the pin 26a, and de-stress the spring 25. This has an added advantage. The valve member 14 has to be removed manually. If the spring is still stressed during the removal procedure, there is a risk that the valve member 14 may snap back into the closed position, before it could be removed, under the action of the spring, thus possibly trapping the fingers of the person trying to remove the valve.

## Claims

1. A valve for use in controlling the flow of liquid out of a container, the valve comprising a valve body (10) having an inlet (11) and an outlet (12) for liquid, a valve seat (13), a valve member (14) movable in the downstream direction onto the valve seat (13) to close the valve, and an operating device (20) for the valve member (14) positioned downstream of the valve member (14), the valve member (14) being guided for translational movement between opened and closed positions, there being a spring (25) arranged to urge the operating member (20) in a direction to close the valve; the valve also having a control member (28) for applying force to open the valve; **characterised in that** there is a shaft (21) which extends from the operating member (20) out of the valve body; to engage firstly with the control member (28) and then with the spring (25), the spring (25) comprising a spiral spring wound around the shaft and contained within a spring housing (24) separate from the valve body (10).

2. A valve as claimed in Claim 1, comprising a head and a shank (16), the shank sliding in a guide member to define the translational movement.

3. A valve as claimed in Claim 1 or Claim 2, in which the operating device (20) contacts the valve member to bring about movement of the valve member, without being connected to the valve member.

4. A valve as claimed in Claim 3, in which the operating device comprises a pivotally mounted operating lever (20), part of the operating lever being inserted into a space in the valve member.

5. A valve as claimed in Claim 4, in which the shank (16) of the valve member has a slot therein an end of the operating lever being inserted into the slot.

6. A valve as claimed in Claim 1, in which the spring pulls the valve member closed to ensure tightness.

7. A valve as claimed in Claim 1, in which the control member comprises a control lever.

8. A valve as claimed in Claim 1, in which one end of the spring (25) is locked in position by locking means (26a), the locking means (26a) being disconnectable to de-stress or unload the spring (25).

9. A valve as claimed in Claim 4, in which the operating device (20) has an S-shaped portion.

10. A valve as claimed in Claim 1, in which the operating device (20) has a portion (26) with a cam like portion (30) enabling the valve to move into an over-centre position in which the valve is locked in the open position.

11. A valve as claimed in Claim 1, in which the inner end of the shaft (21) is mounted in a blind socket so that no liquid can seep past the shaft (21) at that end.

12. A valve as claimed in Claim 1, in which the passage containing the shaft (21) is provided with a seal (33) to prevent liquid from seeping to atmosphere.

13. A container for liquid, fitted with a valve as claimed in any one of the preceding claims.

14. A container as claimed in Claim 13, comprising a tanker vehicle.

## Patentansprüche

1. Ein Ventil zum Gebrauch bei der Steuerung des Ausflusses einer Flüssigkeit aus einem Behälter; das ventil aufweist: ein ventilgehäuse (10) mit einem Einlass (11) und einem Auslass (12) für Flüssigkeit, einen Ventilsitz (13), einen Ventilkörper (14), der in Strömungsrichtung auf den Ventilsitz (13) bewegt werden kann, um das Ventil zu schließen, und ein Betätigungselement (20) für den Ventilkörper (14), das in Strömungsrichtung unterhalb des Ventilkörpers (14) positioniert ist, wobei der Ventilkörper (14) für eine translatorische Bewegung zwischen der offenen und der geschlossenen Position geführt wird und eine Feder (25) vorhanden ist, die so angeordnet ist, dass sie das Betätigungselement (20) in Ventilschließrichtung drängt; das Ventil hat außerdem ein Steuerungselement (28), um eine Kraft zum Öffnen des Ventils aufbringen zu können; das Ventil ist **dadurch gekennzeichnet, dass** eine Welle (21) vorhanden ist, die ausgehend von dem Betätigungselement (20) sich aus dem Ventilgehäuse erstreckt, um zunächst mit dem Steuerungselement (28) und dann mit der Feder (25) in Eingriff zu stehen, und dass die Feder (25) aus einer Spiralfeder besteht, die um die Welle herum gewickelt ist und die innerhalb eines Federgehäuses (24) untergebracht ist, das von dem Ventilgehäuse (10) getrennt ist.

2. Ventil nach Anspruch 1, das einen Kopf und einen Schaft (16) aufweist, wobei der Schaft zur Festlegung der translatorischen Bewegung in einem Führungselement gleitet.

3. Ventil nach Anspruch 1 oder 2, wobei das Betätigungselement (20) an dem Ventilkörper anliegt, um den Ventilkörper in Bewegung zu setzen, ohne mit dem Ventilkörper verbunden zu sein.

4. Ventil nach Anspruch 3, wobei das Betätigungselement einen drehbar gelagerten Betätigungshebel (20) hat, wobei ein Teil des Betätigungshebels in einer Ausnehmung am Ventilkörper eingesetzt ist.

5. Ventil nach Anspruch 4, bei dem der Schaft (16) des Ventilkörpers einen Schlitz aufweist, in dem das eine Ende des Betätigungshebels eingesetzt ist.

6. Ventil nach Anspruch 1, bei dem die Feder den Ventilkörper fest zuzieht, um Dichtheit zu gewährleisten.

7. Ventil nach Anspruch 1, bei dem das Steuerungselement einen Steuerungshebel aufweist.

8. Ventil nach Anspruch 1, bei dem das eine Ende der Feder (25) durch ein Verschlussmittel (26a) in Position gehalten wird, wobei das Verschlussmittel (26a) lösbar ist, um die Feder (25) zu entspannen oder zu entlasten.

9. Ventil nach Anspruch 4, bei dem das Betätigungselement (20) einen S-förmigen Abschnitt aufweist.

10. Ventil nach Anspruch 1, bei dem das Betätigungselement (20) einen Abschnitt (26) mit einem nockenartigen Abschnitt (30) aufweist, der es ermöglicht, das Ventil in eine außermittige Position zu bringen, in der das Ventil in der offenen Position festgehalten ist.

11. Ventil nach Anspruch 1, bei dem das innere Ende der Welle (21) in einem Blindloch montiert ist, so dass keine Flüssigkeit über dieses Ende der Welle (21) hinaus gelangen kann.

12. Ventil nach Anspruch 1, bei dem der die Welle (21) aufnehmende Durchgang mit einer Dichtung (33) versehen ist, um zu verhindern, dass Flüssigkeit an die Atmosphäre gelangt.

13. Flüssigkeitsbehälter, der mit einem Ventil nach einem der vorhergehenden Ansprüche versehen ist.

14. Behälter nach Anspruch 13, der in einem Tankfahrzeug eingesetzt ist.

## Revendications

1. Soupape pour une utilisation dans la commande de l'écoulement d'un liquide hors d'un conteneur, la soupape comprenant un corps de soupape (10) ayant une entrée (11) et une sortie (12) pour le liquide, un siège de soupape (13), un élément de soupape (14) mobile dans la direction aval vers et sur le siège de soupape (13) pour fermer la soupape, et un dispositif d'actionnement (20) pour l'élément de soupape (14), positionné en aval de l'élément de soupape (14), l'élément de soupape (14) étant guidé selon un mouvement en translation entre des positions ouverte et fermée, un ressort (25) étant agencé pour pousser l'élément d'actionnement (20) dans une direction propre à fermer la soupape ; la soupape ayant également un élément de commande (28) pour appliquer une force propre à ouvrir la soupape ; **caractérisée en ce qu'**un arbre (21) s'étend depuis l'élément d'actionnement (20) hors du corps de soupape, pour venir tout d'abord en contact avec l'élément de commande (28), puis avec le ressort (25), le ressort (25) comprenant un ressort enroulé en spirale autour d'une tige et contenu au sein d'un boîtier de ressort (24) séparé du corps de soupape (10).

2. Soupape telle que revendiquée dans la revendication 1, comprenant une tête et une tige (16), la tige coulissant dans un élément de guidage pour définir le mouvement en translation.

3. Soupape telle que revendiquée dans la revendication 1 ou la revendication 2, dans laquelle le dispositif d'actionnement (20) vient en contact avec l'élément de soupape pour provoquer le mouvement de l'élément de soupape, sans être connecté à l'élément de soupape.

4. Soupape telle que revendiquée dans la revendication 3, dans laquelle le dispositif d'actionnement comprend un levier d'actionnement (20) monté pivotant, une partie du levier d'actionnement étant insérée dans un espace ménagé dans l'élément de soupape.

5. Soupape selon la revendication 4, dans laquelle la tige (16) de l'élément de soupape comporte une fente dans laquelle est insérée une extrémité du levier d'actionnement.

6. Soupape telle que revendiquée dans la revendication 1, dans laquelle le ressort tire l'élément de soupape (14) vers sa position fermée, pour assurer l'étanchéité.

7. Soupape selon la revendication 1, dans laquelle l'élément de commande comprend un levier de commande.

8. Soupape selon la revendication 1, dans laquelle une extrémité du ressort (25) est verrouillée en position par un moyen de verrouillage (26a), le moyen de verrouillage (26a) étant déconnectable pour soulager ou décharger le ressort (25).

9. Soupape telle que revendiquée dans la revendication 4, dans laquelle le dispositif d'actionnement (20) a une portion en forme de S.

10. Soupape telle que revendiquée dans la revendication 1, dans laquelle le dispositif d'actionnement (20) comporte une portion (26) ayant une portion (30) semblable à une came, permettant à la soupape de venir en position d'arc-boutement dans laquelle la soupape est verrouillée en position ouverte.

11. Soupape telle que revendiquée dans la revendication 1, dans laquelle l'extrémité intérieure de l'arbre (21) est montée dans une douille borgne de telle sorte qu'aucun liquide ne peut suinter au-delà de l'arbre (21) au niveau de cette extrémité.

12. Soupape telle que revendiquée dans la revendication 1, dans laquelle le passage contenant l'arbre (21) est pourvu d'un joint (33) pour empêcher le liquide de suinter vers l'atmosphère.

13. Conteneur pour liquide, muni d'une soupape telle que revendiquée dans l'une quelconque des revendications précédentes.

14. Conteneur tel que revendiqué dans la revendication 13, formant citerne de véhicule.
